(19) Europäisches Patentamt / European Patent Office / Office européen des brevets

(11) **EP 3 857 097 B1**

(12) **FASCICULE DE BREVET EUROPEEN**

(45) Date de publication et mention
de la délivrance du brevet:
**01.07.2026 Bulletin 2026/27**

(21) Numéro de dépôt: **19765683.8**

(22) Date de dépôt: **05.09.2019**

(51) Classification Internationale des Brevets (IPC):
**F16H 59/48** *(2006.01)*    **F16H 61/02** *(2006.01)*

(52) Classification Coopérative des Brevets (CPC):
**F16H 61/0213; F16H 59/48;** F16H 2059/142;
F16H 2061/0096; Y02T 10/62

(86) Numéro de dépôt international:
**PCT/EP2019/073636**

(87) Numéro de publication internationale:
**WO 2020/064288 (02.04.2020 Gazette 2020/14)**

(54) **PROCEDE DE SELECTION D'UN ETAT DE CHAINE CINEMATIQUE EN FONCTION DE CONTRAINTES D'ACCELERATION**

VERFAHREN ZUR AUSWAHL EINES ANTRIEBSSTRANGSTATUS AUFGRUND VON BESCHLEUNIGUNGSBESCHRÄNKUNGEN

METHOD FOR SELECTING A DRIVETRAIN STATUS ON THE BASIS OF ACCELERATION CONSTRAINTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.09.2018 FR 1871078**

(43) Date de publication de la demande:
**04.08.2021 Bulletin 2021/31**

(73) Titulaires:
• **Renault s.a.s
92100 Boulogne Billancourt (FR)**
• **NISSAN MOTOR CO., LTD.
Yokohama-shi, Kanagawa 221-0023 (JP)**

(72) Inventeur: **LEFEVRE, Aurélien
92340 Bourg la Reine (FR)**

(74) Mandataire: **Renault Group
Renault s.a.s.
1 avenue du Golf
FR TCR AVA 055
78084 Guyancourt Cedex (FR)**

(56) Documents cités:
DE-A1- 102016 205 260    FR-A1- 2 992 040
FR-A1- 3 005 920    FR-A1- 3 030 425

**Description**

La présente invention se rapporte au contrôle des chaînes cinématiques de véhicules, en particulier de véhicules hybrides, disposant de plusieurs états impliquant la transmission du couple d'une ou plusieurs machines de traction en direction des roues du véhicule, sur différents rapports de démultiplication.

Plus précisément, elle a pour objet un procédé de sélection d'une cible d'état de chaîne cinématique par la transmission d'un groupe motopropulseur de véhicule.

Cette invention trouve une application privilégiée, mais non limitative, sur des transmissions de véhicule hydride regroupant le mouvement de plusieurs sources de traction, sur des rapports de démultiplication propres, en direction des roues des véhicule. Elle s'applique cependant dans des conditions analogues, sur tout véhicule équipé d'une transmission automatique à rapports discrets.

Sur un véhicule équipé d'une transmission automatique à rapports discrets, qu'il soit électrique/hybride ou thermique, la fonction logicielle du choix d'un état de chaîne cinématique comme cible, peut être définie comme une combinaison de(s) coupleur(s) et de réducteur(s) spécifiques à une architecture véhicule donnée. Cet état cible est « choisi » ou sélectionné, puis établi, ou « réalisé » par la transmission, à l'issue d'une ou plusieurs opérations modifiant la combinaison de coupleurs impliqués. La transmission automatique prend en considération un certain nombre de contraintes, dans le choix de sa cible.

Ces contraintes peuvent être :

- des contraintes de fiabilité (régimes minimal/maximal des organes de traction),

des contraintes de confort acoustique (bruits, vibrations, chocs), des contraintes de sens de marche (Marche avant, Marche Arrière, Parking, etc.).

Une contrainte de premier ordre dans le choix d'un état de chaîne cinématique comme cible, est la performance. Cette contrainte garantit que l'état choisi permette de répondre à la charge du groupe motopropulseur requise, soit par le conducteur au travers de sa pédale d'accélération, soit par une autre fonction logicielle (régulateur de vitesse, etc.).

Par la publication FR 3 030 425, on connait un procédé de sélection d'une cible d'état de chaine cinématique par la transmission d'un groupe motopropulseur différent de l'objet de la présente invention. Dans ce procédé il est appliqué à la transmission du groupe moto propulseur du véhicule une contrainte de niveau d'accélération minimale à respecter dans la sélection de sa cible. Toutefois, un tel procédé de sélection d'une cible d'état de chaine cinématique ne permet pas d'adapter pleinement le comportement du véhicule aux attentes du conducteur.

Par la publication FR 2 992 040, on connaît un procédé dédié au contrôle d'une boîte de vitesses automatisée d'un véhicule muni d'un groupe motopropulseur et d'un régulateur de vitesse. Il consiste à déterminer le rapport à engager dans la boîte, en fonction de l'accélération maximale sur ce rapport, de la vitesse de déplacement du véhicule, et de la consigne de vitesse programmée par le calculateur. Le choix du rapport s'effectue alors en fonction des contraintes d'accélération imposées par le régulateur.

Cette publication décrit une stratégie de choix de rapport de boîte en fonction de contraintes d'accélération, sans prévoir l'élaboration de celles-ci.

La présente invention est définie par un procédé de sélection d'une cible d'état de chaîne cinématique par la transmission d'un groupe motopropulseur de véhicule selon la revendication 1.

La présente invention vise à définir la contrainte de performance à respecter par un état de la chaîne cinématique pour être choisi comme cible par la transmission.

Dans ce but, elle propose qu'on applique à la transmission une contrainte de niveau d'accélération minimal à respecter dans la sélection de sa cible, avec les étapes suivantes :

- identification du type de comportement du véhicule, parmi plusieurs types de comportement répertoriés,
- calcul de plusieurs niveaux de contrainte d'accélération, en fonction de la vitesse courante, de la charge du groupe moto propulseur, et d'une force résistive additionnelle liée aux conditions particulières de roulage, et

- sélection, parmi les différents niveaux de contrainte calculés, du niveau appliqué à la transmission, selon type de comportement identifié, chaque niveau de contrainte calculé étant le résultat d'un arbitrage entre :
- une valeur brute de contrainte d'accélération dépendant uniquement de la charge du groupe moto propulseur et de la vitesse du véhicule,
- une contrainte d'accélération potentielle déterminée à partir d'une contrainte d'accélération potentielle brute correspondant à l'accélération minimale que doit respecter le groupe moto propulseur sur la cible, quel que soit son niveau de charge, et de la force résistive additionnelle liée aux conditions particulières de roulage,
- une contrainte d'accélération interpolée, calculée en fonction de la contrainte d'accélération potentielle, du niveau de charge du groupe moto propulseur, et de deux contraintes d'accélération ; les deux contraintes d'accélération correspondent à une première valeur de charge et une deuxième valeur de charge, les première et deuxième valeurs de charge étant déterminées en fonction de la contrainte d'accélération potentielle brute.

La contrainte de performance imposée, s'exprime en niveau d'accélération. Cette solution a l'avantage de nécessiter peu de paramètres de réglage. Son utilisation se traduit par un gain substantiel de mémoire embarquée, et simplifie la mise au point du véhicule. En outre, grâce au fait que chaque niveau de contrainte calculé est le résultat d'un arbitrage tel que détaillé ci-dessus, le comportement du véhicule est mieux adapté aux attentes du conducteur.

La présente invention sera mieux comprise à la lecture de la description suivante d'un mode de réalisation non limitatif de l'invention, en se reportant aux dessins annexés.

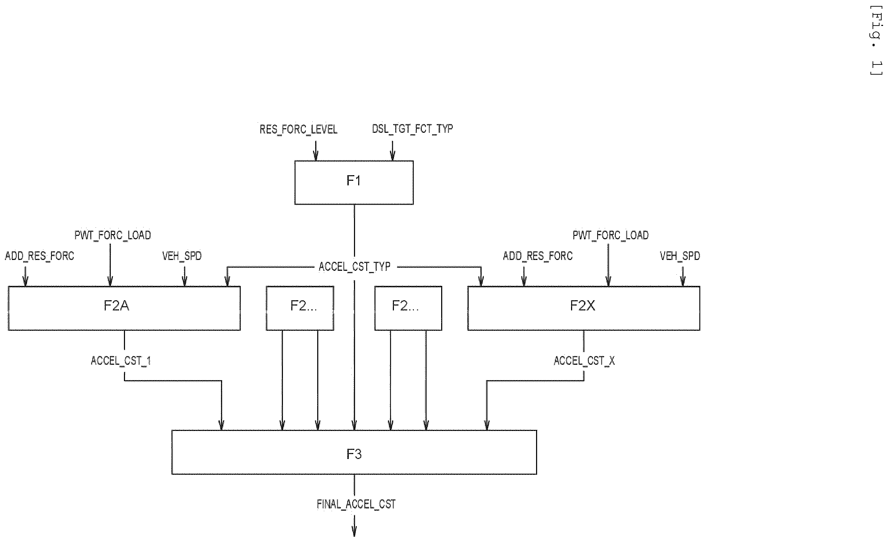

[Fig. 1] est un logigramme de la stratégie développée.

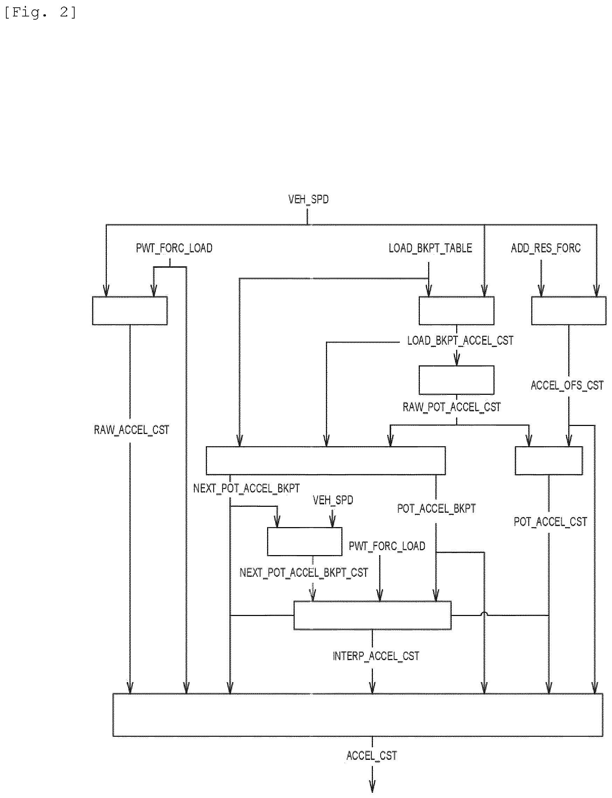

[Fig. 2] est un logigramme d'une fonction F2.

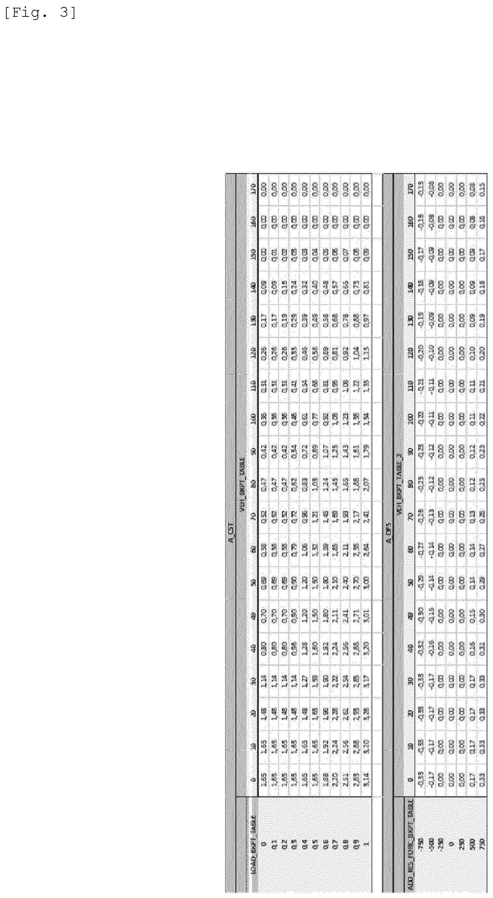

[Fig. 3] illustre la fonction F2.
[Fig. 4] illustre la fonction F2.
[Fig. 5] illustre la fonction F2.

Le procédé de sélection de cible d'état par la transmission, qui est proposé, peut s'inscrire dans un procédé plus large de commande de changements d'états de chaîne cinématique, ou plus simplement de changements de rapports, sur une transmission automatique ou automatisée, intégrée dans un GMP hybride ou non. Sa mise en œuvre se décompose en différentes étapes, conduisant à déterminer une contrainte d'accélération à respecter par la transmission dans la sélection d'un état de la chaîne cinématique, éligible comme cible, et réalisable par la transmission.

Les étapes principales du procédé sont :

- l'identification du type de comportement *(ACCEL_CST_TYP)* du véhicule parmi plusieurs types de comportement répertoriés,
- le calcul de plusieurs niveaux de contrainte d'accélération, *(ACCEL_CST_X)* en fonction de la vitesse courante, de la charge du GMP, et d'une force résistive additionnelle liée aux conditions particulières de roulage, et
- la sélection parmi les différents niveaux de contrainte calculés, du niveau appliqué à la transmission *(FINAL_ACCEL_CST),* selon type de comportement identifié *(ACCEL_CST_TYP),* chaque niveau de contrainte calculé *(ACCEL_CST_X)* étant le résultat d'un arbitrage entre :
- une valeur brute de contrainte d'accélération *(RAW_ACCEL_CST)* dépendant uniquement de la charge du groupe moto propulseur et de la vitesse du véhicule
- une contrainte d'accélération potentielle *(POT_ACCEL_CST)* déterminée à partir d'une contrainte d'accélération potentielle brute (RAW_POT_ACCEL_CST) correspondant à l'accélération minimale que doit respecter le groupe moto propulseur sur la cible, quel que soit son niveau de charge *(PWT_FORC_LOAD),* et de la force résistive additionnelle (ADD_RES_FORC) liée aux conditions particulières de roulage,
- une contrainte d'accélération interpolée *(INTERP_ACCEL_CST),* calculée en fonction de la contrainte d'accélération potentielle *(POT_ACCEL CST),* du niveau de charge du groupe moto propulseur *(PWT_FORC_LOAD),* et de deux contraintes d'accélération *(POT_ACCEL BKPT CST, NEXT_POT_ACCEL_BKPT_CST);* les deux contraintes d'accélération *(POT_ACCEL_BKPT_CST, NEXT_POT_ACCEL_BKPT_CST)* correspondent à une première valeur de charge *(POT_ACCEL_BKPT)* et une deuxième valeur de charge *(NEXT_POT_ACCEL_BKPT),* les première et deuxième valeurs de charge étant déterminées en fonction de la contrainte d'accélération potentielle brute (RAW_POT_ACCEL_CST).

Les contraintes de performances attendues par le conducteur, ne sont pas les mêmes, selon le choix d'un mode de conduite « économique », « dynamique », ou autre. Par ailleurs, le niveau des efforts résistifs, pente, vent, etc., a également une influence sur le comportement et sur le niveau de performances du véhicule. La fonction première F1 définit différents des « types de comportement », correspondant aux attentes du conducteur et aux performances du véhicule.

Les types de comportement prennent des valeurs de 1 à X, en fonction de deux paramètres principaux *RES_FORC_LEVEL* et *DLS_TGT_FCT_TYP.*

Le paramètre *DLS_TGT_FCT_TYP* prend des valeurs de 1 à Z, en fonction du mode de conduite du conducteur (Economique, Neutre, Dynamique, etc.), et en fonction de contraintes de dépollution (par exemple, pendant des phases de chauffage de catalyseur en cours, etc.), ou encore en fonction d'autres besoins. Le paramètre *RES_FORC_LEVEL* correspond au niveau réel de forces résistives du véhicule, selon les conditions de roulage. Il prend des valeurs de 1 à Y en fonction des efforts résistants rencontrés : montée légère, montée importante, descente, vent de face, charge, etc. Ces deux paramètres sont introduits une table logique à deux dimensions [Y, Z] déterminant un type d'accélération *ACCEL_CST_TYP,* exploité par les fonctions suivantes F2 et F3. En résumé les types de comportement peuvent être répertoriés en fonction du mode de conduite adopté par le véhicule, de contraintes de dépollution, et/ou d'un niveau habituel de force résistive du véhicule, déterminé dans des conditions de roulage habituelles (courantes).

Les fonctions F2 calculent X contraintes d'accélération. Toutes les fonctions F2 contiennent le même contenu fonctionnel. Seuls les paramètres de réglage diffèrent. Chaque fonction F2 correspond à un type de comportement. Elle est active, si le type *ACCEL_CST_TYP* déterminé par la fonction F1 correspond au sien.

Les données d'entrée des fonctions F2 sont :

- la vitesse courante du véhicule *VEH_SPD,*
- la charge du groupe motopropulseur *PWT_FORC_LOAD* déterminée en fonction du pourcentage de force requis par le conducteur (ou un régulateur de vitesse), par rapport à la force minimale et à la force maximale que développée par le groupe motopropulseur dans les conditions de roulage rencontrées.
- la force résistive additionnelle *ADD_RES_FORC* rencontrée en roulage, par rapport à une force résistive théorique observée sur le plat, sans vent, avec une masse de véhicule moyenne, etc.

Les paramètres de réglage des fonctions F2 sont introduits dans les tables *A_CST* et *A_OFS.* La table *A_CST* produit un niveau d'accélération brute *RAW_ACCEL_CST,* à partir d'un axe de vitesse *VEH_BKPT_TABLE* et d'un axe de charge du groupe moto propulseur *LOAD_BKPT_TABLE.* La table *A_OFS* introduit une correction à partir de ses axes de vitesses *VEH_BKPT_TABLE_2* et de force résistive additionnelle *ADD_RES_FORC_BKPT_TABLE.*

Chaque fonction F2 se décompose en plusieurs étapes et sous fonctions, permettant d'élaborer la contrainte d'accélération :

a) élaboration d'une contrainte d'accélération brute *RAW_ACCEL_CST* (étape 1), à partir de la charge du groupe motopropulseur *PWT_FORC_LOAD* et de la vitesse de déplacement du véhicule *VEH_SPD,* introduits dans la table de contrainte d'accélération *A_CST* ;

b) élaboration d'une contrainte d'accélération potentielle.(étape 2) : l'axe de charges *LOAD_BKPT_TABLE,* introduit dans la table d'accélération *A_CST* permet d'obtenir l'ensemble des contraintes d'accélérations à tous les niveaux de charge, à la vitesse véhicule courante *VEH_SPD* ; on obtient en sortie un flux *LOAD_BKPT_ACCEL_CST,* sous la forme d'un vecteur de niveau d'accélération, de même dimension que l'axe de charges *LOAD_BKPT_TABLE*; on retient une contrainte d'accélération potentielle brute *RAW_POT_ACCEL_CST,* qui est la plus petite valeur du vecteur *LOAD_BKPT_ACCEL_CST.*

La valeur de correction *ACCEL_OFS_CST* est calculée par la table *A_OFS,* dont les entrées sont la force résistive additionnelle *ADD_RES_FORC,* et la vitesse du véhicule *VEH_SPD. ACCEL_OFS_CST* est ajoutée à la valeur brute d'accélération *RAW_POT_ACCEL_CST* pour obtenir la contrainte d'accélération potentielle *POT_ACCEL_CST.* Cette dernière est la valeur consolidée théorique d'accélération minimale que devrait respecter un état de la chaîne cinématique pour être choisi comme cible, quel que soit le niveau de charge *PWT_FORC_LOAD* du groupe motopropulseur.

c) élaboration d'une contrainte d'accélération interpolée (étape 3) : lorsque la contrainte potentielle d'accélération *POT_ACCEL_CST* est plus faible que toute les valeurs présentes dans la cartographie *A_CST* pour une vitesse donnée du véhicule, la correction *ACCEL_OFS_CST* prend une valeur négative. ; cette particularité donne lieu à une phase d'interpolation, qui garantit la continuité et la cohérence, de la valeur de contrainte finale calculée, pour calculer une valeur de charge donnée du groupe motopropulseur.

On commence par extraire la valeur de l'axe de charge *LOAD_BKPT_TABLE* correspondant à d'accélération potentielle brute *RAW_POT_ACCEL_CST* (fonction F21). Cette extraction est effectuée en comparant la valeur *RAW_POT_ACCEL_CST* au vecteur *LOAD_BKPT_ACCEL_CST,* afin d'identifier sur l'axe, les coordonnées qui sont identiques. Si plusieurs coordonnées du vecteur *LOAD_BKPT_ACCEL_CST* sont égales à *RAW_POT_ACCEL_CST,* on sélectionne la coordonnée *LOAD_BKPT_ACCEL_CST* qui a la valeur d'axe la plus élevée. Cette valeur est transmise à la suite de la fonction F2, sous le nom *POT_ACCEL_BKPT,* qui correspond à une première valeur de charge. La coordonnée suivante donne une valeur d'axe intitulée *NEXT_POT_ACCEL_BKPT,* qui correspond à une deuxième valeur de charge.

Dans un deuxième temps, la valeur *NEXT_POT_ACCEL_BKPT* et la vitesse du véhicule *VEH_SPD* sont introduites dans la table *A_CST, pour* obtenir la contrainte d'accélération correspondante, *NEXT POT ACCEl_BKPT_CST.*

Dans un troisième temps, lorsque la charge du groupe motopropulseur *PWT_FORC_LOAD* se trouve entre les valeurs d'axe *POT_ACCEL_BKPT* et *NEXT_POT_ACCEL_BKPT,* la fonction F22 calcule une contrainte d'accélération interpolée *INTERP_ACCEL_CST,* à l'aide de la formule suivante :

$$INTERP\_ACCEL\_CST = POT\_ACCEL\_CST + (PWT\_FORC\_LOAD - POT\_ACCEL\_BKPT) * (NEXT\ POT\ ACCEl\_BKPT\_CST - POT\ ACCEL\ CST)/(NEXT\ POT\ ACCEL\ BKPT-POT\_ACCEL\_BKPT)$$

Dans un dernier temps, la fonction F23 procède à un arbitrage entre l'ensemble des contraintes d'accélération calculées en amont dans la fonction F2 pour obtenir la contrainte d'accélération lié au typage de la fonction F2. Plusieurs cas peuvent alors se présenter avec l'ordre de priorisation suivant :

- si la valeur de correction de contrainte d'accélération *ACCEL_OFS_CST* est supérieure ou égale à 0, la contrainte d'accélération finale *ACCEL_CST_X* est égale à la valeur maximale entre la valeur brute de contrainte d'accélération *RAW_ACCEL_CST* et la contrainte d'accélération potentielle *POT_ACCEL_CST,*
- si la charge du groupe motopropulseur *PWT_FORC_LOAD* est inférieure ou égale à la deuxième valeur de charge *NEXT_POT_ACCEL_BKPT* et supérieure ou égale à la première valeur de charge *POT_ACCEL_BKPT,* la contrainte d'accélération finale *ACCEL_CST_X* est égale à la valeur de contrainte d'accélération interpolée *INTERP_ACCEL_CST,*
- si la charge du groupe motopropulseur *PWT_FORC_LOAD* est inférieure ou égale à la première valeur de charge *POT_ACCEL_BKPT,* la contrainte d'accélération finale *ACCEL_CST_X* est égale à la valeur de contrainte potentielle *POT_ACCEL_CST,* et
- si la charge du groupe motopropulseur *PWT_FORC_LOAD* est supérieure ou égale à la deuxième valeur de charge *NEXT_POT_ACCEL_BKPT,* la contrainte d'accélération finale *ACCEL_CST_X* est égale à la valeur brute de contrainte d'accélération *RAW_ACCEL_CST.*

En résumé, chaque niveau de contrainte calculé *X_ACCEL_CST* est le résultat d'un arbitrage entre :

- une valeur brute de contrainte d'accélération *RAW_ACCEL_CST* dépendant uniquement de la charge du GMP et de la vitesse du véhicule,
- une contrainte d'accélération potentielle *POT_ACCEL_CST* correspondant à l'accélération minimale que doit respecter le GMP sur la cible, quel que soit son niveau de charge *PWT_FORC_LOAD,* et
- une contrainte d'accélération interpolée *INTERP_ACCEL_CST,* calculée en fonction de la contrainte d'accélération potentielle *PWT_FORC_LOAD,* du niveau de charge du groupe moto propulseur *POT_ACCEL_CST,* et de deux contraintes d'accélération *POT_ACCEL_BKPT_CST* et *NEXT_POT_ACCEL_BKPT_CST.*

La fonction F3 sélectionne une des contraintes d'accélération issues des fonctions F2, en fonction du type de contrainte d'accélération *ACCEL_CST_TYP* élaboré dans la fonction F1. Si le type de comportement *ACCEL_CST_TYP* est égal à B, la contrainte d'accélération finale *FINAL_ACCEL_CST* est égale à la contrainte d'accélération du type B de la fonction F2, *ACCEL_CST_B.* La contrainte d'accélération finale *FINAL_ACCEL_CST* sélectionnée par la fonction F3 permet de définir les états de la chaîne cinématique éligibles à devenir la cible de la transmission automatique.

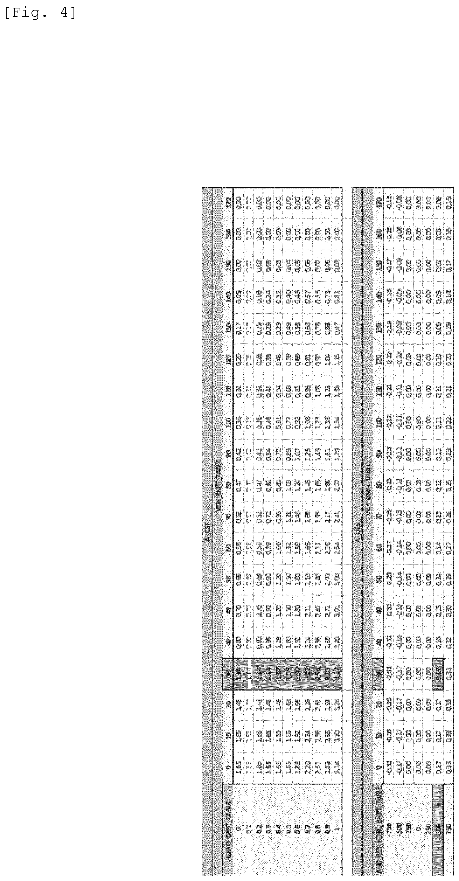

[Fig. 4] illustre le calcul de l'accélération potentielle, avec les hypothèses suivantes :

- *VEH_SPD* = 30 km/h
- *ADD_RES_FORC* = 500 N

La valeur de correction *ACCEL_OFS_CST* se lit sur la table *A_OFS.* Elle est égale à 0.17 m/s$^2$, en accord avec les entrées *VEH_SPD* et *ADD_RES_FORC.* Le vecteur des contraintes d'accélération est donné par la table *A_CST.* Il regroupe les valeurs de la colonne *VEH_SPD* = 30 km/h, en accord avec les entrées *VEH_SPD* et *LOAD_BKPT_TABLE.* La contrainte d'accélération potentielle brute *RAW_POT_ACCEL_CST* est la plus petite valeur de *LOAD_BKPT_ACCEL_CST.* Elle est égale à 1,14 m/s$^2$. La contrainte d'accélération potentielle *POT_ACCEL_CST,* qui est la somme de *RAW_POT_ACCEL_CST* et de *ACCEL_OFS_CST,* est égale à 1,31 m/s$^2$.

Dans le cas où la valeur de correction est supérieure ou égale à zéro, l'arbitrage de la fonction F23 entre les contraintes d'accélération intervient de la manière suivante : la valeur de correction *ACCEL_OFS_CST* étant supérieur à zéro, la valeur de la contrainte d'accélération ACCEL_CST_X est égale à la valeur maximale, entre la valeur brute de contrainte d'accélération *RAW_ACCEL_CST* et la contrainte d'accélération potentielle *POT ACCEL CST :*

- si *PWT_FORC_LOAD* = 0,2, la contrainte d'accélération brute RAW_ACCEL_CST est égale à 1,14 m/s$^2$. La valeur de *POT_ACCEL_CST* étant égale à 1,31 m/s$^2$ alors la contrainte d'accélération *ACCEL_CST_X* est égale à 1,31 m/s$^2$.
- si *PWT_FORC_LOAD* = 0,5, la contrainte d'accélération brute *RAW_ACCEL_CST* est égale à 1,59 m/s$^2$. La valeur de *POT_ACCEL_CST* étant égale à 1,31 m/s$^2$, la contrainte d'accélération *ACCEL_CST_X* est égale à 1,59 m/s$^2$.

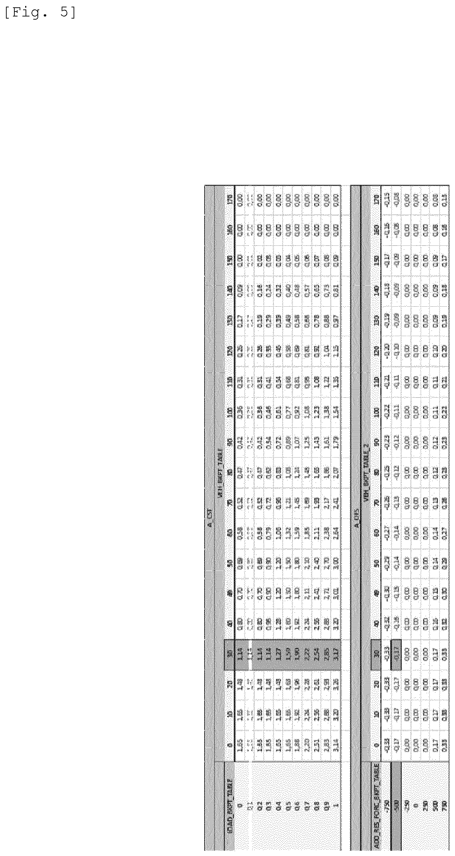

[Fig. 5] illustre le calcul de l'accélération potentielle, à partir des hypothèses suivantes :

- *VEH_SPD* = 30 km/h

- *ADD_RES_FORC* = - 500 N

La valeur de correction *ACCEL_OFS_CST* issue de la table *A_OFS* est égale à - 0,17 m/s$^2$, selon les entrées *VEH_SPD* et *ADD_RES_FORC.* Le vecteur des contraintes d'accélération se déduit de la table *A_CST.* Il contient toutes valeurs de la colonne, pour une valeur de *VEH_SPD* égale à 30 km/h, en accord avec les entrées *VEH_SPD et LOAD_BKPT_TABLE.* La contrainte d'accélération potentielle brute *RAW_POT_ACCEL_CST* est la plus petite valeur de *LOAD_BKPT_ACCEL_CST,* soit 1,14 m/s$^2$. La contrainte d'accélération potentielle *POT_ACCEL_CST,* égale à la somme de *RAW_POT_ACCEL_CST* et de *ACCEL_OFS_CST,* est de 0,97 m/s$^2$.

L'obtention de la contrainte d'accélération interpolée s'effectue comme suit. La fonction F21 permet de définir la valeur des axes *NEXT_POT_ACCEL_BKPT* et *POT_ACCEL_BKPT.* Ces valeurs sont calculées comme suit :

- *LOAD_BKPT_TABLE* a quatre valeurs [0 0,1 0,2 0,3] permettant d'obtenir *la valeur de RAW_POT_ACCEL_CST dans le vecteur LOAD_BKPT_ACCEL_CST.* : la valeur la plus élevée étant 0,3, c'est celle que prend *POT_ACCEL_BKPT.*
- *NEXT_POT_ACCEL_BKPT* étant la valeur de l'axe *LOAD_BKPT_TABLE* suivant *POT_ACCEL_BKPT, NEXT_POT_ACCEL_BKPT* prend la valeur 0,4 : avec cette valeur, la contrainte d'accélération associée, *NEXT_POT_ACCEl_BKPT_CST* possède une valeur de 1,27 m/s$^2$, conformément à la table *A_CST,* en accord avec les entrées *NEXT_POT_ACCEL BKPT et VEH SPD.*

En prenant l'hypothèse que la charge du groupe moto propulseur *PWT_FORC_LOAD* est égale à 0,35, le calcul d'interpolation est le suivant : *INTERP_ACCEL_CST* = 0,97 + (0,35 - 0,3) * (1, 27 - 0,97) / (0,4 - 0,3) = 1,12 m/s$^2$. La contrainte d'accélération interpolée *INTERP_ACCEL_CST* a donc une valeur de 1,12 m/s$^2$ pour une charge *PWT_FORC_LOAD* de 0,35.

Dans le cas où la valeur de correction est inférieure à zéro, l'arbitrage de la fonction F23 intervient de la manière suivante.

- si la charge du groupe moto propulseur *PWT_FORC_LOAD* est égale à 0,35 (donc inférieure à *NEXT_POT_ACCEL_BKPT* = 0,4, et supérieure à *POT_ACCEL_BKPT* = 0,3) la contrainte d'accélération finale *ACCEL_CST_X* est égale à la valeur de contrainte d'accélération interpolée *INTERP_ACCEL_CST* qui est de 1,12 m/s$^2$.
- si la charge du groupe moto propulseur *PWT_FORC_LOAD* est égale à 0.25 (donc inférieure à POT_ACCEL_BKPT = 0,3), la contrainte d'accélération finale *ACCEL_CST_X* est égale à la valeur de contrainte d'accélération potentielle *POT_ACCEL_CST,* qui est de 0,97 m/s$^2$.
- si la charge du groupe moto propulseur *PWT_FORC_LOAD* est égale à 0.5 (donc supérieure à *NEXT_POT_ACCEL_BKPT* = 0, 4), la contrainte d'accélération finale *ACCEL_CST_X* est égale à la valeur brute de contrainte d'accélération *RAW_ACCEL_CST,* qui est de 1,59 m/s$^2$.

## Revendications

1. Procédé de sélection d'une cible d'état de chaîne cinématique par la transmission d'un groupe motopropulseur (GMP) de véhicule, selon lequel on applique à la transmission une contrainte de niveau d'accélération minimale (*FINAL_ACCEL_CST*) à respecter dans la sélection de la cible, avec les étapes suivantes :

   - identification du type de comportement (*ACCEL_CST_TYP*) du véhicule parmi plusieurs types de comportement répertoriés,
   - calcul de plusieurs niveaux de contrainte d'accélération, (*ACCEL_CST_X),* en fonction de la vitesse courante, de la charge du GMP, et d'une force résistive additionnelle liée aux conditions particulières de roulage,
   - sélection parmi les différents niveaux de contrainte calculés, du niveau appliqué à la transmission (*FINAL_ACCEL_CST),* selon type de comportement identifié (*ACCEL_CST_TYP*), **caractérisé en ce que** chaque niveau de contrainte calculé (*ACCEL_CST_X*) est le résultat d'un arbitrage entre :
   - une valeur brute de contrainte d'accélération *(RAW_ACCEL_CST)* dépendant uniquement de la charge du GMP et de la vitesse du véhicule
   - une contrainte d'accélération potentielle (*POT_ACCEL_CST*) déterminée à partir d'une contrainte d'accélération potentielle brute (RAW_POT_ACCEL_CST) correspondant à l'accélération minimale que doit respecter le GMP sur la cible, quel que soit son niveau de charge (*PWT_FORC_LOAD*), et de la force résistive additionnelle (ADD_RES_FORC) liée aux conditions particulières de roulage,
   - une contrainte d'accélération interpolée (*INTERP_ACCEL_CST),* calculée en fonction de la contrainte d'accélération potentielle (*POT_ACCEL_CST),* du niveau de charge du GMP (*PWT_FORC_LOAD*), et de deux contraintes d'accélération (*POT_ACCEL_BKPT_CST, NEXT_POT_ACCEL_BKPT_CST*) ; les deux contraintes d'accélération *(POT_ACCEL_BKPT_CST, NEXT_POT_ACCEL_BKPT_CST)* correspondent à une première valeur de charge (*POT_ACCEL_BKPT*) et une deuxième valeur de charge (*NEXT_POT_ACCEL_BKPT*), les première et deuxième valeurs de charge étant déterminées en fonction de la contrainte d'accélération potentielle brute (RAW_POT_ACCEL_CST).

2. Procédé de sélection d'une cible d'état selon la revendication 1, **caractérisé en ce que** les types de comportement sont répertoriés en fonction du mode de conduite adopté par le véhicule.

3. Procédé de sélection d'une cible d'état selon la revendication 1 ou 2, **caractérisé en ce que** les types de comportement sont répertoriés en fonction de contraintes de dépollution.

4. Procédé de sélection d'une cible d'état selon la revendication 1, 2 ou 3, **caractérisé en ce que** les types de comportement sont répertoriés en fonction d'un niveau habituel de force résistive du véhicule, déterminé dans des conditions de roulage rencontrées.

5. Procédé de sélection d'une cible d'état selon l'une des revendications précédentes, **caractérisé en ce que**, si une valeur de correction de contrainte d'accélération (*ACCEL_OFS_CST), déterminée en fonction de la force résistive additionnelle (ADD_RES_FORC)* et de *la vitesse du véhicule (VEH_SPD),* est supérieure ou égale à 0, la contrainte d'accélération finale *(ACCEL_CST_X)* est égale à la valeur maximale entre la valeur brute de contrainte d'accélération (*RAW_ACCEL_CST)* et la contrainte d'accélération potentielle (*POT ACCEL CST).*

6. Procédé de sélection d'une cible d'état selon l'une des revendications précédentes **caractérisé en ce que**, si la charge du groupe motopropulseur (*PWT_FORC_LOAD)* est inférieure ou égale à la deuxième valeur de charge (*NEXT_POT_ACCEL_BKPT)* et supérieure ou égale à la première valeur de charge (*POT_ACCEL_BKPT),* la contrainte d'accélération calculée *(ACCEL_CST_X)* est égale à la valeur de contrainte d'accélération interpolée *INTERP_ACCEL_CST.*

7. Procédé de sélection d'une cible d'état selon l'une des revendications précédentes, **caractérisé en ce que**, si la charge du groupe motopropulseur (*PWT_FORC_LOAD)* est inférieure ou égale à la première valeur de charge *(POT_ACCEL_BKPT),* la contrainte d'accélération calculée (*ACCEL_CST_X)* est égale à la valeur de contrainte potentielle *(POT_ACCEL_CST).*

8. Procédé de sélection d'une cible d'état selon l'une des revendications précédentes, **caractérisé en ce que**, si la charge du groupe motopropulseur (*PWT_FORC_LOAD)* est supérieure ou égale à la deuxième valeur de charge (*NEXT_POT_ACCEL_BKPT),* la contrainte d'accélération calculée est égale à une valeur brute de contrainte d'accélération (*RAW_ACCEL_CST).*

**Patentansprüche**

1. Verfahren zum Auswählen eines Zustandsziels einer Kinematikkette durch das Getriebe eines Antriebsstrangs (GMP) eines Fahrzeugs, bei dem auf das Getriebe eine Mindestbeschleunigungsniveaubeschränkung (FINAL_ACCEL_CST) angewendet wird, die beim Auswählen des Ziels zu beachten ist, mit den folgenden Schritten:

- Identifizieren der Verhaltensart (ACCEL_CST_TYP) des Fahrzeugs unter mehreren aufgelisteten Verhaltensarten,
- Berechnen von mehreren Beschleunigungsbeschränkungsniveaus (ACCEL_CST_X) in Abhängigkeit von der aktuellen Geschwindigkeit, von der Last des GMP und von einer zusätzlichen resistiven Kraft, die mit den besonderen Fahrbedingungen verbunden ist,
- Auswählen, unter den verschiedenen berechneten Beschränkungsniveaus des auf das Getriebe angewendeten Niveaus (FINAL_ACCEL_CST) gemäß der identifizierten Verhaltensart (ACCEL_CST_TYP), **dadurch gekennzeichnet, dass** jedes berechnete Beschränkungsniveau (ACCEL_CST_X) das Ergebnis einer Arbitrierung ist zwischen:
- einem Beschleunigungsbeschränkungsrohwert (RAW_ACCEL_CST), der nur von der Last des GMP und von der Geschwindigkeit des Fahrzeugs abhängig ist
- einer potentiellen Beschleunigungsbeschränkung (POT_ACCEL_CST), die ausgehend von einer rohen potentiellen Beschleunigungsbeschränkung (RAW_POT_ACCEL_CST) bestimmt wird, entsprechend der Mindestbeschleunigung, die der GMP bei dem Ziel beachten muss, unabhängig von seinem Lastniveau (PWT_FORC_LOAD), und von der zusätzlichen resistiven Kraft (ADD_RES_FORC), die mit den besonderen Fahrbedingungen verbunden ist,

- einer interpolierten Beschleunigungsbeschränkung (INTERP_ACCEL_CST), die in Abhängigkeit von der potenziellen Beschleunigungsbeschränkung (POT_ACCEL_CST), vom Lastniveau des GMP (PWT_FORC_LOAD) und von zwei Beschleunigungsbeschränkungen (POT_ACCEL_BKPT_CST, NEXT_POT_ACCEL_BKPT_CST) berechnet wird; wobei die beiden Beschleunigungsbeschränkungen (POT_ACCEL_BKPT_CST, NEXT_POT_ACCEL_BKPT_CST) einem ersten Lastwert (POT_ACEL_BKPT) und einem zweiten Lastwert (NEXT_POT_ACCEL_BKPT) entsprechen, wobei der erste und der zweite Lastwert in Abhängigkeit von der rohen potentiellen Beschleunigungsbeschränkung (RAW_POT_ACCEL_CST) bestimmt werden.

2. Verfahren zum Auswählen eines Zustandsziels nach Anspruch 1, **dadurch gekennzeichnet, dass** die Verhaltensarten in Abhängigkeit von dem von dem Fahrzeug angenommenen Fahrmodus aufgelistet sind.

3. Verfahren zum Auswählen eines Zustandsziels nach Anspruch 1 oder 2, **dadurch gekennzeichnet, dass** die Verhaltensarten in Abhängigkeit von Reinigungsbeschränkungen aufgelistet sind.

4. Verfahren zum Auswählen eines Zustandsziels nach Anspruch 1, 2 oder 3, **dadurch gekennzeichnet, dass** die Verhaltensarten in Abhängigkeit von einem üblichen Niveau der resistiven Kraft des Fahrzeugs aufgelistet sind, das unter aufgetretenen Fahrbedingungen bestimmt wird.

5. Verfahren zum Auswählen eines Zustandsziels nach einem der vorhergehenden Ansprüche, **dadurch gekennzeichnet, dass**, wenn ein Beschleunigungsbeschränkungskorrekturwert (ACCEL_OFS_CST), der in Abhängigkeit von der zusätzlichen resistiven Kraft (ADD_RES_FORC) und von der Geschwindigkeit des Fahrzeugs (VEH_SPD) bestimmt wird, größer oder gleich 0 ist, die finale Beschleunigungsbeschränkung (ACCEL_CST_X) gleich dem maximalen Wert zwischen dem Beschleunigungsbeschränkungsrohwert (RAW_ACCEL_CST) und der potenziellen Beschleunigungsbeschränkung (POT_ACCEL_CST) ist.

6. Verfahren zum Auswählen eines Zustandsziels nach einem der vorhergehenden Ansprüche, **dadurch gekennzeichnet, dass**, wenn die Last des Antriebsstrangs (PWT_FORC_LOAD) kleiner oder gleich dem zweiten Lastwert (Next_POT_ACCEL_BKPT) und größer oder gleich dem ersten Lastwert (POT_ACCEL_BKPT) ist, die berechnete Beschleunigungsbeschränkung (ACCEL_CST_X) gleich dem interpolierten Beschleunigungsbeschränkungswert INTERP_ACCEL_CST ist.

7. Verfahren zum Auswählen eines Zustandsziels nach einem der vorhergehenden Ansprüche, **dadurch gekennzeichnet, dass**, wenn die Last des Antriebsstrangs (PWT_FORC_LOAD) kleiner oder gleich dem ersten Lastwert (POT_ACCEL_BKPT) ist, die berechnete Beschleunigungsbeschränkung (ACCEL_CST_X) gleich dem potentiellen Beschränkungswert (POT_ACCEL_CST) ist.

8. Verfahren zum Auswählen eines Zustandsziels nach einem der vorhergehenden Ansprüche, **dadurch gekennzeichnet, dass**, wenn die Last des Antriebsstrangs (PWT_FORC_LOAD) größer oder gleich dem zweiten Lastwert (NEXT_POT_ACCEL_BKPT) ist, die berechnete Beschleunigungsbeschränkung gleich einem Beschleunigungsbeschränkungsrohwert (RAW_ACCEL_CST) ist.

**Claims**

1. Method for the selection of a drivetrain status target by the transmission of a vehicle powertrain, according to which a minimum acceleration level constraint (FINAL_ACCEL_CST) to be met when selecting the target is applied to the transmission, with the following steps:

- identifying the vehicle behaviour type (ACCEL_CST_TYP) from several listed behaviour types,
- calculating several acceleration constraint levels, (ACCEL_CST_X), on the basis of the current speed, the load on the powertrain, and an additional resistive force linked to the particular driving conditions,
- selecting, from the different constraint levels calculated, the level applied to the transmission (FINAL_ACCEL_CST), according to the behaviour type identified (ACCEL_CST_TYP), **characterized in that** each constraint level calculated (ACCEL_CST_X) is the result of a decision between:

- a raw acceleration constraint value (RAW_ACCEL_CST) that depends solely on the load on the powertrain and on the vehicle speed

- a potential acceleration constraint (POT_ACCEL_CST) determined from a raw potential acceleration constraint (RAW_POT_ACCEL_CST) that corresponds to the minimum acceleration that the powertrain must comply with on the target, regardless of the load level (PWT_FORC_LOAD) thereof, and from the additional resistive force (ADD_RES_FORC) linked to the particular driving conditions,

- an interpolated acceleration constraint (INTERP_ACCEL_CST), calculated on the basis of the potential acceleration constraint (POT_ACCEL_CST), the powertrain load level (PWT_FORC_LOAD), and two acceleration constraints (POT_ACCEL_BKPT_CST, NEXT_POT_ACCEL_BKPT_CST); the two acceleration constraints (POT_ACCEL_BKPT_CST, NEXT_POT_ACCEL_BKPT_CST) corresponding to a first load value (POT_ACCEL_BKPT) and to a second load value (NEXT_POT_ACCEL_BKPT), the first and second load values being determined on the basis of the raw potential acceleration constraint (RAW_POT_ACCEL_CST).

2. Method for the selection of a target status according to Claim 1, **characterized in that** the behaviour types are listed on the basis of the driving mode adopted by the vehicle.

3. Method for the selection of a target status according to Claim 1 or 2, **characterized in that** the behaviour types are listed on the basis of pollution reduction constraints.

4. Method for the selection of a target status according to Claim 1, 2 or 3, **characterized in that** the behaviour types are listed on the basis of a normal level of resistive force on the vehicle, determined in the driving conditions encountered.

5. Method for the selection of a target status according to one of the preceding claims, **characterized in that**, if an acceleration constraint offset value (ACCEL_OFS_CST), determined on the basis of the additional resistive force (ADD_RES_FORC) and of the vehicle speed (VEH_SPD), is greater than or equal to 0, the final acceleration constraint (ACCEL_CST_X) is equal to the maximum value out of the raw acceleration constraint value (RAW_ACCEL_CST) and the potential acceleration constraint (POT_ACCEL_CST).

6. Method for the selection of a target status according to one of the preceding claims, **characterized in that**, if the load on the powertrain (PWT_FORC_LOAD) is less than or equal to the second load value (NEXT_POT_ACCEL_BKPT) and greater than or equal to the first load value (POT_ACCEL_BKPT), the calculated acceleration constraint (ACCEL_CST_X) is equal to the interpolated acceleration constraint value (INTERP_ACCEL_CST).

7. Method for the selection of a target status according to one of the preceding claims, **characterized in that**, if the load on the powertrain (PWT_FORC_LOAD) is less than or equal to the first load value (POT_ACCEL_BKPT), the calculated acceleration constraint (ACCEL_CST_X) is equal to the potential constraint value (POT_ACCEL_CST).

8. Method for the selection of a target status according to one of the preceding claims, **characterized in that**, if the load on the powertrain (PWT_FORC_LOAD) is greater than or equal to the second load value (NEXT_POT_ACCEL_BKPT), the calculated acceleration constraint is equal to the raw acceleration constraint value (RAW_ACCEL_CST).

[Fig. 1]

[Fig. 2]

[Fig. 3]

[Fig. 4]

[Fig. 5]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3030425

- FR 2992040